(19) Europäisches Patentamt
European Patent Office
Office européen des brevets

(11) EP 0 859 988 B1

(12) EUROPÄISCHE PATENTSCHRIFT

(45) Veröffentlichungstag und Bekanntmachung des Hinweises auf die Patenterteilung:
**12.05.1999 Patentblatt 1999/19**

(21) Anmeldenummer: **96945846.2**

(22) Anmeldetag: **30.10.1996**

(51) Int Cl.[6]: **G06F 17/60**

(86) Internationale Anmeldenummer:
**PCT/DE96/02068**

(87) Internationale Veröffentlichungsnummer:
**WO 97/16780 (09.05.1997 Gazette 1997/20)**

# (54) VERFAHREN ZUR ZUORDNUNG VON RESSOURCEN AUF FAHRZEUGE, DIE EINE VORGEGEBENE STRECKE BEFAHREN, DURCH EINEN RECHNER

METHOD FOR THE COMPUTERIZED ALLOCATION OF RESOURCES TO VEHICLES TRAVELLING OVER A PREDETERMINED SECTION

PROCEDE D'ATTRIBUTION INFORMATISEE DE RESSOURCES A DES VEHICULES PARCOURANT UNE SECTION PREDEFINIE

(84) Benannte Vertragsstaaten:
**AT BE CH DE FR GB GR LI NL**

(30) Priorität: **30.10.1995 DE 19540834**

(43) Veröffentlichungstag der Anmeldung:
**26.08.1998 Patentblatt 1998/35**

(73) Patentinhaber: **SIEMENS AKTIENGESELLSCHAFT**
**80333 München (DE)**

(72) Erfinder:
- **HOFMEISTER, Michael**
  **D-84424 Isen (DE)**
- **TESCH, Doris**
  **D-86343 Königsbrunn (DE)**

(56) Entgegenhaltungen:
- **COMPUTER-AIDED TRANSIT SCHEDULING. PROCEEDINGS OF THE FIFTH INTERNATIONAL WORKSHOP ON COMPUTER-AIDED SCHEDULING OF PUBLIC TRANSPORT, MONTREAL, QUE., CANADA, 19-23 AUG. 1990, ISBN 3-540-55634-6, 1992, BERLIN, GERMANY, SPRINGER-VERLAG, GERMANY, Seiten 395-406, XP000671756 DESROCHERS M ET AL: "CREW-OPT: subproblem modeling in a column generation approach to urban crew scheduling"**
- **MANAGEMENT SCIENCE, JUNE 1993, USA, Bd. 39, Nr. 6, ISSN 0025-1909, Seiten 657-682, XP000671791 HOFFMAN K L ET AL: "Solving airline crew scheduling problems by branch-and-cut" in der Anmeldung erwähnt**
- **MANAGEMENT SCIENCE, JUNE 1990, USA, Bd. 36, Nr. 6, ISSN 0025-1909, Seiten 674-688, XP000671792 FISHER M L ET AL: "Optimal solution of set covering/partitioning problems using dual heuristics" in der Anmeldung erwähnt**

EP 0 859 988 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Bei einer erheblichen Anzahl von Fahrzeugen, für die jeweils unter bestimmten Nebenbedungungen Ressourcen zugeordnet werden müssen, besteht ein grundlegendes Problem darin, eine möglichst optimale Zuordnung der Ressourcen unter Berücksichtigung der Nebenbedingungen für die Anzahl von Fahrzeugen zu finden. Die Fahrzeuge sind jeweils für eine vorgegebene Strecke vorgesehen, wodurch die Ressourcen nicht nur den Fahrzeugen als solche sondern den Fahrzeugen gekoppelt mit einer jeweiligen Strecke, die das Fahrzeug zu einem bestimmten vorgegebenen Zeitraum befährt, zugeordnet wird.

Mögliche Ressourcen bilden hierbei beispielsweise Dienstpläne für das die Fahrzeuge steuernde Personal, die in diesem Fall beispielsweise Nebenbedingungen wie Tarifverträgen oder zeitlichen Einschränkungen der möglichen Arbeitszeit unterliegen.

Unter Fahrzeugen sind im weiteren beispielsweise Züge oder auch Busse, also Fahrzeuge zu verstehen, denen eine bestimmte Fahrroute zugeordnet ist.

Grundlegende Methoden der mathematischen Programmierung, vor allem auch der linearen Programmierung und Verzweigungsregeln für ein sogenanntes Branch-and-Bound-Verfahren sind bekannt (C. Barnhart et al, Branch-and Price: Column Generation for Solving Huge Integer Programs, Mathematical Programming: State of the Art, J. Birge, K. Murty (eds.), University of Michigan, S. 186-207, 1994).

Auch verschiedene numerische Optimierungsverfahren, beispielsweise das Simplex-Verfahren oder auch das GreedyVerfahren sind bekannt (G. Nemhauser, L. Wolsey, Integer and Combinatorial Optimization, Wiley Interscience Series in Discrete Mathematics and Optimization, John Wiley & Sons, S. 30-41, S. 393, 1988).

Spaltengenerierungsverfahren sind bekannt und werden in bekannter Weise eingesetzt zur Zuordnung von Ressourcen auf Öffentliche Nahverkehrsmittel (N. Desrochers et al, A Column Generation Approach to the Urban Transit Crew Scheduling Problem, Transportation Science, Vol. 23, No. 1, February 1989, S. 1-13).

Dieses Verfahren zur Zuordnung von Ressourcen auf öffentliche Nahverkehrsmittel birgt vor allem den Nachteil in sich, daß das Verfahren nur bei kleineren Zuordnungsproblemen bei vernünftiger Laufzeit, das heißt bei vernünftigem Rechenzeitbedarf durchführbar ist. Bei größeren Problemen wächst der Rechenzeitbedarf bei diesem Verfahren so erheblich an, daß die Laufzeit zur Ermittlung qualitativ guter oder sogar garantiert optimaler Lösungen nicht mehr tolerierbar ist.

Verfahren zur Generierung von Schnittebenen sind bekannt (K. L. Hoffmann, M. Padberg, Solving Airline Crew Scheduling Problems by Branch-and-Cut, Management Science, Vol. 39, No. 6, S. 657-682, 1993).

Der Erfindung liegt das Problem zugrunde, ein Verfahren anzugeben zur Zuordnung von Ressourcen auf Fahrzeuge, die vorgegebene Strecken befahren, durch einen Rechner, das schneller und somit mit geringerem Rechenzeitbedarf durchführbar ist als das bekannte Verfahren.

Das Problem wird mit dem Verfahren gemäß Patentanspruch 1 gelöst.

Das Verfahren geht von einer Menge zulässiger Ressourcen, die implizit in Form eines Spaltengenerierungsgraphen SGG gespeichert werden, aus. Aus diesem Spaltengenerierungsgraphen SGG werden im Verlaufe des Verfahrens die zulässigen Ressourcen explizit abgeleitet, als Spalten einer Binärmatrix codiert und für die Optimierung durch ein numerisches Optimierungsverfahren verwendet.

Zu Beginn des Verfahrens wird ein Teil des Spaltengenerierungsgraphen, also ein Teil der Menge zulässiger Ressourcen auf beliebige Weise ausgewählt.

Auf den Teil der Menge zulässiger Ressourcen wird das numerische Optimierungsverfahren angewendet

Das Problem der Zuordnung des Teils der Menge zulässiger Ressourcen ist ein sogenanntes Lineares Programm, unter Berücksichtigung einer Nebenbedingung der Ganzzahligkeit der ermittelten optimalen Zuordnung ein ganzzahliges Lineares Programm.

Liefert das Optimierungsverfahren eine Lösung, so wird durch ein Spaltengenerierungsverfahren versucht, neue, gültige, zusätzliche Spalten für den Teil der Menge zulässiger Ressourcen zu finden. Werden diese gefunden, wird das Optimierungsverfahren weitergeführt auf einen neuen Teil der Menge zulässiger Ressourcen, der sich nun zusammensetzt aus dem Teil der Menge zulässiger Ressourcen und den neu generierten Spalten.

Liefert das Optimierungsverfahren keine Lösung, werden ebenso neue, gültige, zusätzliche Spalten für den Teil der Menge zulässiger Ressourcen ermittelt. Werden diese gefunden, wird das Optimierungsverfahren ebenso weitergeführt auf einen neuen Teil der Menge zulässiger Ressourcen, der sich nun zusammensetzt aus dem Teil der Menge zulässiger Ressourcen und den neu generierten Spalten.

Wurden keine neuen Spalten generiert, so wird untersucht, ob die Lösung des Optimierungsverfahrens ganzzahlig ist.

Ist dies der Fall, so wird das Verfahren auf das nächste Teilproblem der anstehenden zu lösenden Teilprobleme des Branch-and-Bound-Verfahrens gelöst. Die gefundendene Lösung stellt die bisher beste bekannte Zuordnung der Ressourcen auf die Fahrzeuge dar.

Ist die Lösung jedoch nicht ganzzahlig, so werden Schnittebenen eingeführt, unter deren Berücksichtigung

das Optimierungsverfahren weitergeführt wird.

Können keine weiteren Schnittebenen mehr generiert werden und ergibt das Optimierungsverfahren noch immer keine ganzzahlige Lösung, wird der Teil der Menge zulässiger Ressourcen in kleinere Teilprobleme aufgeteilt, für die nun jeweils einzeln versucht wird, diese durch das im vorigen beschriebene Verfahren zu lösen. Dieses Verfahren wird iterativ für alle Teilprobleme durchgeführt.

Dieses Verfahren birgt vor allem den Vorteil in sich, daß es erheblich weniger Rechenzeit benötigt, als das bekannte Verfahren. Somit liefert das erfindungsgemäße Verfahren schneller qualitativ vergleichbare Lösungen oder ermittelt qualitativ höherwertigere Lösungen bei gleicher Laufzeit beider Verfahren. Dies wird vor allem durch die Kombination des Spaltengenerierungsverfahrens mit den Schnittebenenverfahren für die zugrunde liegenden Set Partitioning Probleme, also für die Ermittlung der Zuordnungen, erreicht. Durch die Schnittebenenverfahren wird üblicherweise eine verbesserte untere Schranke für das aktuell zu lösende Teilproblem des Branch-and-Bound-Verfahrens erreicht. Oftmals kann durch die Schnittebenenverfahren auch eine ganzzahlige Lösung des aktuellen Teilproblems ermittelt werden, was dazu führt, daß nicht weiter verzweigt werden muß.

Durch die Weiterbildung des Verfahrens gemäß Anspruch 3 werden zusätzlich Optimierungsheuristiken auf jeweils einen Teil der Menge zulässiger Ressourcen angewendet, um eine möglichst gute globale obere Schranke für das Branch-and-Bound-Verfahren zu ermitteln und somit den Rechenzeitbedarf noch weiter zu reduzieren und das Verfahren zu beschleunigen.

Noch weiter reduziert wird der Rechenzeitbedarf durch die Weiterbildung des Verfahrens nach Anspruch 4, da durch diesen Anspruch ein möglichst guter Anfangswert für das Branch-and-Bound-Verfahren gefunden wird.

Weiterbildungen der Erfindung ergeben sich aus den abhängigen Ansprüchen.

Bevorzugte Ausführungsbeispiele sind in den Figuren dargestellt und werden im weiteren näher beschrieben.

Es zeigen

| | |
|---|---|
| Figuren 1a bis 1c | in einem Ablaufdiagramm die Verfahrensschritte des erfindungsgemäßen Verfahrens mit einigen Weiterbildungen des Verfahrens für ein Teilproblem; |
| Figur 2 | ein Blockschaltbild, in dem verschiedene Realisierungsmöglichkeiten für das numerische Optimierungsverfahren dargestellt sind. |

Anhand der Figuren 1a bis 1c und der Figur 2 wird die Erfindung weiter erläutert.

In den Figuren 1a bis c sind die Schritte des Verfahrens dargestellt.

Das Verfahren dient zur Bestimmung einer optimalen Zuordnung von Ressourcen auf Fahrzeuge, die eine vorgegebene Strecke befahren.

Diese Bestimmung der optimalen Zuordnung geschieht notwendigerweise durch einen Rechner, da numerische Optimierungsverfahren OV zur Lösung des Problems erfindungsgemäß verwendet werden, die nur von einem Rechner durchgeführt werden können.

Das Verfahren ist beispielsweise auch anwendbar auf die Erstellung eines optimalen zulässigen Dienstplans. In diesem Fall sind die Ressourcen beispielsweise die Fahrer der jeweiligen Fahrzeuge, die unter bestimmten Nebenbedingungen, z. B. Tarifbedingungen oder maximal erlaubten Fahrzeiten der Fahrer, etc., in der Weise auf die verschiedenen Fahrzeuge verteilt werden, daß die vorgegebenen Strecken von den Fahrzeugen zu vorgegebenen Zeiten, beispielsweise den Fahrplänen, befahren werden können.

Aus gegebenen Fahrzeugumläufen ist eine zulässige Zuordnung der Ressourcen zu den Fahrzeugen zu konstruieren, der optimal ist gemessen an einer geeigneten Kostenfunktion, die noch im weiteren beschrieben wird.

Gesucht ist für den Anwendungsfall der Bestimmung eines Dienstplans also beispielsweise die Bildung von Diensten für das fahrende Personal, die sicherstellt, daß für jedes Fahrzeug ein Fahrer zur Verfügung steht. Da die Länge der Umläufe jedoch in der Regel die festgesetzte maximale Länge eines Dienstes bei weitem übersteigt, muß die Möglichkeit von Fahrerwechseln und Ablösungen der Fahrer mit einbezogen werden.

Hierzu werden die Fahrzeugumläufe in einzelne Umlaufsegmente $S_i$ zerlegt. Ein Index i bezeichnet eindeutig ein bestimmtes Umlaufsegment. Der Index i ist eine beliebige natürliche Zahl im Bereich von 1 bis m, wobei eine Zahl m die Anzahl der Umlaufsegmente $S_i$ angibt.

Aus den Umlaufsegmenten $S_i$ werden zulässige Dienste $P_j$ gebildet. Diese zulässigen Dienste $P_j$ liegen implizit in Form eines Spaltengenerierungsgraphen SGG vor. Ein zulässiger Dienst $P_j$ läßt sich beschreiben als eine Folge von Umlaufsegmenten $S_i$, die gewissen Nebenbedingungen genügen muß. Diese Nebenbedingungen können sich je nach Anwendungsfall beispielsweise ergeben aus der Forderung nach zeitlicher Sequenzialität oder geographischer Realisierbarkeit.

Weitere Nebenbedingungen können sich ergeben aus gesetzlichen Vorgaben, z. B. über die maximale zusammenhängende Fahrtdauer eines Fahrers eines Fahrzeugs, aus Tarifverträgen oder auch aus Betriebvereinbarungen.

Es wird davon ausgegangen, daß eine Liste generierter Dienste $P_j$ vorliegt. Ein zweiter Index j bezeichnet hierbei jeden generierten Dienst $P_j$ eindeutig. Der zweite Index j ist eine natürliche Zahl im Bereich von 1 bis n, wobei eine Zahl n die Anzahl zulässiger Dienste $P_j$ angibt.

Jeder der generierten Dienste $P_j$ kann verstanden werden als eine Liste von Umlaufsegmenten $S_i$, die durch den jeweils generierten Dienst $P_j$ abgedeckt werden.

Zur Beschreibung der Liste zulässiger Dienste $P_j$ wird eine digitale Binärmatrix $\vec{A}$ der Dimension m x n gebildet wie folgt:

$$\bar{A} = \left(a_{ij}\right)_{mxn} \qquad (1)$$

$$a_{ij} = \begin{cases} 1, & falls \quad S_i \in P_j \\ 0, & sonst \end{cases} \qquad (2)$$

Die digitale Binärmatrix $\vec{A}$ ist üblicherweise sehr groß; sie kann mehrere hunderttausend Spalten aufweisen. Sie wird aus diesem Grund nicht explizit, sondern implizit in Form des Spaltengenerierungsgraphen SGG im Rechner gespeichert.

Aus diesem werden bei Bedarf explizit benötigte Spalten mit Hilfe eines Spaltengenerierungsverfahrens SG, das beispielsweise aus (N. Desrochers et al, A Column Generation Approach to the Urban Transit Crew Scheduling Problem, Transportation Science, Vol. 23, No. 1, February 1989, S. 1-13) bekannt ist, abgeleitet.

Dadurch, daß zu Beginn des Verfahrens nur ein Teil der gesamten digitalen Binärmatrix $\vec{A}$, also nur ein Teil TZR der Menge von zulässigen Ressourcen ZR, verwendet wird, wird das Verfahren erheblich beschleunigt.

Das Spaltengenerierungsverfahren SG verwendet als Kriterium zur Suche nach neuen Spalten NS, die zur optimalen Lösung des LP-relaxierten Problems beitragen können, sogenannte reduzierte Kosten, die sich in bekannter Weise aus der Lösung des sogenannten Dualen Linearen Programms ergeben, das mittels des Dualen SIMPLEX-Verfahrens gelöst werden kann (G. Nemhauser, L. Wolsey, Integer and Combinatorial Optimization, Wiley Interscience Series in Discrete Mathematics and Optimization, John Wiley & Sons, S. 37-39, 1988).

Aus der Liste der zulässigen Ressourcen ZR muß nun eine zulässige Zuordnung ausgewählt werden. Um in dem Beispiel der Erstellung eines optimalen Dienstplanes zu bleiben, bedeutet dies, daß ein zulässiger Dienstplan, unter Berücksichtigung aller Rahmenbedingungen, aus der Liste der zulässigen Dienste ausgewählt wird. Hierfür werden binäre Variable $x_j$ verwendet.

Ist der generierte Dienst $P_j$ im ausgewählten zulässigen Dienstplan enthalten, so wird der binären Variable $x_j$ der Wert 1 zugeordnet. Ansonsten wird der binären Variable $x_j$ der Wert 0 zugeordnet.

Dies bedeutet also:

$$x_j \in \{0, 1\} \qquad (3)$$

Die Zulässigkeit eines Dienstplans, also die Zulässigkeit der Zuordnung von Ressourcen auf die jeweiligen Fahrzeuge wird bestimmt durch zwei Bedingungen:

1. Jedes Umlaufsegment $S_i$ muß in genau einem generierten Dienst $P_j$ des zulässigen Dienstplans enthalten sein. Dies wird formuliert durch die Bedingung

$$\sum_{=1}^{n} a_{ij} x_j = 1 \quad . \qquad (4)$$

Die Bedingung muß für alle i = 1..m erfüllt sein. Kurz geschrieben bedeutet dies:

$$\vec{A}\vec{x} = \vec{1} . \qquad (5)$$

Der Vektor $\vec{1}$ ist ein Spaltenvektor, in dem jedem Element des Spaltenvektors der Wert 1 zugeordnet ist.

2. Jeder generierte Dienst $P_j$ muß genau einem Depot $D_k$ zugeordnet sein. Ein dritter Index k ist eine beliebige natürliche Zahl im Bereich von 1 bis r. Der dritte Index k bezeichnet jedes Depot $D_k$ eindeutig. Eine Kapazität $d_k$ des jeweiligen Depots $D_k$ wird beschrieben durch die Maximalzahl von Diensten $D_j$, die von dem Depot $D_k$ aus ausgeführt werden dürfen. Damit ergeben sich die Bedingungen

$$\sum_{\in D_k} x_j \leq d_k . \qquad (6)$$

In Matrixschreibweise bedeutet dies:

$$\vec{D}\vec{x} \leq \vec{d} . \qquad (7)$$

Hierbei bezeichnet $\vec{d}$ einen Depotkapazitätenvektor.

3. Jeder generierte Dienst $P_j$ ist von einem bestimmten Typ, beispielsweise Frühdienst, Spätdienst, einteiliger oder zweiteiliger Dienst, etc.

In dem allgemeinen Fall bedeutet dies, daß jede zulässige Ressource von einem bestimmten, vom Anwendungsfall abhängigen Typ ist.

Ein Diensttyp $T_l$ wird durch einen vierten Index l eindeutig identifiziert. Der vierte Index l ist eine natürliche Zahl im Bereich von 1 bis s.

Damit aus dem zulässigen Dienstplan zu einem späteren Zeitpunkt zulässige Dienstturni gebildet werden können, darf der Dienstplan nicht zu viele, aber auch nicht zu wenige Dienste $P_j$ der einzelnen Diensttypen $T_l$ enthalten.

Es gibt somit zu jedem Diensttyp $T_l$ eine untere Schranke $\underline{l}$ und eine obere Schranke $\overline{l}$, so daß

$$\underline{l} \leq \sum_{j \in T_l} x_j \leq \overline{t_l} . \qquad (8)$$

In Matrixschreibweise bedeutet dies

$$\underline{\vec{t}} \leq \vec{T}\vec{x} \leq \overline{\vec{t}} \qquad (9)$$

mit $\underline{\vec{t}} = (\underline{t}_1, ..., \underline{t}_l, ..., \underline{t}_s)^t$ und $\overline{\vec{t}} = (\overline{t}_1, ..., \overline{t}_l, ..., \overline{t}_s)^t$.

Hierbei zeigt das hochgestellte t bei jedem Vektor an, daß dieser Vektor transponiert ist.

Jedem generierten Dienst $P_j$ wird ein Kostenwert $c_j$ zugeordnet. Dies dient zur Bewertung bei der späteren Optimierung der zulässigen Zuordnung der Ressourcen auf die Fahrzeuge.

Je nach Anwendungsfall können in dem Kostenwert $c_j$ unterschiedliche Aspekte berücksichtigt werden, z. B. Lohnkosten, Lohnnebenkosten, unproduktive Zeiten, Dienstvorbereitung, Dienstbeendigung, etc.

Markiert ein Variablenvektor $\underline{x} = (x_1, ..., x_j, ..., x_n)^t$ einen zulässigen Dienstplan, so sind "seine" gesamten Kosten K gegeben durch die Summe aller in ihm enthaltenen Dienste $P_j$, jeweils multipliziert mit den die zugeordneten einzelnen Kostenwerten $c_j$, also durch die Kostenfunktion, die sich ergibt aus

$$K = \sum_{j=1}^{n} c_j x_j \quad . \tag{10}$$

Es handelt sich hierbei um ein Set Partitioning Problem mit den Bedingungen der Gleichungen (5) und (3) mit den Nebenbedingungen, die durch die Gleichungen (7) und (9) gegeben sind.

Von dem Rechner wird auf den Teil TZR der Menge zulässiger Ressourcen ZR, also auf einen Teil der gesamten digitalen Binärmatrix $\vec{A}$ das numerisches Optimierungsverfahren OV, das im weiteren beschrieben wird, ausgeführt.

Das gesamte im weiteren erläuterte Verfahren wird als ein Branch-and-Bound-Verfahren bezeichnet, welches durch geeignete Schnittebenenverfahren, die ebenfalls im weiteren erläutert werden, ergänzt wird. Man spricht in diesem Fall auch von einem Branch-and-Cut-Verfahren.

Der Teil TZR der Menge zulässiger Ressourcen ZR wird im Verlaufe des Verfahrens außerdem um geeignete neue Spalten NS durch das Spaltengenerierungsverfahren SG ergänzt.

Allgemein wird ein Ausgangsproblem bei Branch-and-Bound-Verfahren in kleinere Teilprobleme zerlegt, so daß die Lösung eines dieser Teilprobleme die Lösung des Ausgangsproblems darstellt, in der Hoffnung, daß die Teilprobleme leichter zu lösen sind als das Ausgangsproblem. Kann man auch die Teilprobleme nicht losen, so wird für jedes Teilproblem erneut verzweigt. Die Vorgehensweise wird solange weitergeführt, bis eine optimale Lösung des Ausgangsproblems gefunden wird.

Ein Problem bei den Branch-and-Bound-Verfahren ist die Auswahl der Verzweigungsregeln. Für das erfindungsgemäße Verfahren ist die Auswahl der Verzweigungsregeln nicht von Bedeutung.

Es werden drei unterschiedliche Varianten als Verzweigungsregel vorgestellt, die in dem erfindungsgemäßen Verfahren Anwendung finden können. Weitere Verzweigungsregeln sind jedoch auch ohne Einschränkungen anwendbar.

Es kann beispielsweise, falls ein Problem nicht gelöst werden kann, nach einer Variablen verzweigt werden. Dies bedeutet, daß das aktuelle Problem, in diesem Fall zu Beginn des Verfahrens aus dem Teil TZR der Menge zulässiger Ressourcen ZR, wenn keine Lösung durch das numerische Optimierungsverfahren OV gefunden wird, in kleinere Teilprobleme aufgeteilt wird, in dem eine Variable $x_{j0}$ auf 1 bzw. auf 0 fixiert wird. Die Teilprobleme erhalten also eine Zusatzbedingung, entweder $x_{j0} = 1$ oder $x_{j0} = 0$.

Es kann ebenso nach einer ganzen Zeile verzweigt werden. In diesem Fall wählt man eine Zeile des verwendeten Teils TZR der gesamten digitalen Binärmatrix $\vec{A}$, die zum aktuellen Problem gehört. Beispielsweise wählt man eine Zeile $i_0$, in der möglichst viele Einsen stehen. Eine Menge j der Spaltenindizes der Einsen in der Zeile $i_0$ wird in zwei etwa gleichmächtige Teilmengen $J_1$ und $J_2$ zerlegt. Da die Zeile $j_0$ durch genau eine Spalte überdeckt werden muß, muß in der optimalen Lösung entweder eine Variable mit Index in $J_1$ oder eine Variable mit Index in $J_2$ den Wert 1 aufweisen. Das Teilproblem, das aus dem aktuellen Problem, also aus dem aktuellen Teil TZR entsteht, weist dann eine zusätzliche Bedingung auf:

$$\sum_{\in J_q} x_j = 1 \quad . \tag{11}$$

Ein Index q bezeichnet jede Teilmenge $J_q$ eindeutig.

Eine dritte Möglichkeit, die als Verzweigungsregel verwendet werden kann, ist die Verzweigung nach einem Zeilenpaar. In diesem Fall werden zwei Zeilen $i_1$ und $i_2$ des Teils TZR der Menge zulässiger Ressourcen ZR ausgewählt. Jede der beiden Zeilen $i_1$ und $i_2$ müssen wegen der Gleichung (5) durch genau eine Spalte überdeckt werden. Die Verzweigung erfolgt durch die Forderung, daß $i_1$ und $i_2$ durch dieselbe bzw. durch unterschiedliche Spalten überdeckt werden. Eine erste Spaltenindexmenge $J_1$ der Einsen in der Zeile $i_1$ bzw. eine zweite Spaltenindexmenge $J_2$ der Einsen in Zeile $i_2$ führt zu folgender zusätzlichen Bedingung, jeweils eine Bedingung für ein aufgespaltenes Teilproblem, die bei Aufteilung des aktuellen Problems in zwei kleinere Teilprobleme hinzugefügt werden:

$$\sum_{\in J_1 \cap J_2} x_j = 1 \tag{12}$$

und

$$\sum_{\in J_1 \cap J_2} x_j = 0 \qquad (13)$$

Wie oben beschrieben, werden im Verlauf des Verfahrens Probleme jeweils in kleinere Teilprobleme zerlegt. Da diese selbstverständlich nicht gleichzeitig gelöst werden können, bedarf es einer Verwaltung der noch ungelösten Probleme.

Hierzu wird ein Problem, sobald es durch eine Verzweigungsprozedur erzeugt worden ist, einer in einem Speicher des Rechners gespeicherten Problemliste hinzugefügt.

Die Reihenfolge, in der die Probleme der Problemliste zur weiteren Bearbeitung wieder entnommen werden, ist beliebig.

Ohne Einschränkung der Allgemeingültigkeit werden im folgenden drei mögliche Listenverarbeitungsstrategien angegeben.

Eine erste Möglichkeit besteht in der Entnahme des jeweils zuletzt gespeicherten Problems zur weiteren Bearbeitung.

Es ist jedoch ebenso möglich, das jeweils zuerst in der Problemliste gespeicherte Problem zur weiteren Bearbeitung wieder zu entnehmen.

Eine dritte Möglichkeit besteht darin, jeweils das Problem mit einer kleinsten unteren Schranke, deren Ermittlung im weiteren erläutert wird, jeweils als nächstes aus der Liste zur weiteren Bearbeitung zu entnehmen.

Das Lineare Programm wird nun mit dem numerischen Optimierungsverfahren OV gelöst 11.

Ergibt das numerische Optimierungsverfahren OV für den Teil TZR der Menge zulässiger Ressourcen ZR, also für das jeweilige aktuelle Teilproblem, eine optimale Lösung, und ist diese kostengünstiger als die bisher beste gefundene Lösung, stellt diese eine globale obere Schranke für alle weiteren Teilprobleme dar. Eine Verzweigung des Teils TZR der Menge zulässiger Ressourcen ZR in weitere Teilprobleme ist nicht erforderlich.

Als numerisches Optimierungsverfahren OV 20 kommen unterschiedliche Verfahren in Betracht, die in dem erfindungsgemäßen Verfahren eingesetzt werden können (vgl. Figur 2).

Es werden verschiedene Möglichkeiten verwendet zu Bestimmung unterer Schranken, bei der möglicherweise sogar eine Lösung gefunden wird.

Läßt man in diesem Fall die Forderung nach der Ganzzahligkeit der Variablen weg, so entsteht ein einfaches lineares Programm.

Für lineare Programme gibt es in der Praxis bewährte Lösungsverfahren, beispielsweise das sogenannte Simplex-Verfahren 21. Auch der duale Simplex-Algorithmus zur Relaxation der linearen Programme wird verwendet.

Eine zweite Möglichkeit zur Realisierung des numerischen Optimierungsverfahrens OV zur Bearbeitung der Teilprobleme ist die Verwendung einer dualen Greedy-Heuristik 22, die beschrieben ist in M. L. Fischer, P. Kedia, Optimal Solution of Set Covering/Partitioning Problems Using Dual Heuristics, Management Science Vol. 36, No. 6, S. 674-688, 1990.

Auf jedes der Teilprobleme, die im Verlaufe des Branch-and-Bound-Verfahrens durch Verzweigungen generiert werden und die durch entsprechende Teile TZR der Menge zulässiger Ressourcen ZR charakterisiert werden, wird das numerische Optimierungsverfahren OV von dem Rechner angewendet.

Bei der Auswertung des Ergebnisses des numerischen Optimierungsverfahrens sind folgende Fälle zu unterscheiden:

1. Stellt das numerische Optimierungsverfahren OV fest, daß keine Lösung des aktuellen Teilproblems existiert, muß nicht weiter verzweigt werden, d. h. es werden keine neuen Teilprobleme durch Fixierung weiterer Variablen erzeugt.

2. Wurde das betrachtete Teilproblem durch das numerische Optimierungsverfahren OV garantiert optimal gelöst und ist die Lösung ganzzahlig, so erübrigt sich eine weitere Verzweigung. Ist ferner der Wert der Lösung kleiner als der Wert der bisher besten ermittelten Lösung, so wird die bisherige Lösung durch die neue optimale Lösung ersetzt und die neue Lösung wird abgespeichert.

3. Ist die Lösung nicht ganzzahlig und der Wert der Lösung größer als der Wert der bisher besten ganzzahligen Lösung, also größer als eine aktuell globale obere Schranke des gesamten Problems, so erübrigt sich eine weitere Verzweigung, da die beste ganzzahlige Lösung des betrachteten Teilproblems nicht besser sein kann als die beste bisher im Verlaufe des Branch-and-Bound-Verfahrens gefundene ganzzahlige Lösung.

4. Ansonsten werden durch Anwendung der Verzweigungsregeln neue Teilprobleme generiert und in die Problemliste engetragen.

Anschließend wird das nächste Teilproblem aus der Problemliste zur Bearbeitung entnommen. Dieses Verfahren iteriert solange, bis die Problemliste leer ist oder andere Beschränkungen, die beispielsweise in einer vorgegebenen maximalen Laufzeit des Verfahrens auf dem Rechner, einer vorgegebenen maximalen Anzahl von Iterationen oder einer vorgegebenen garantierten Güte der bisher besten Lösung bestehen können, erreicht sind.

Wird als numerisches Optimierungsverfahren OV das SIMPLEX-Verfahren 21 verwendet, so werden im einzelnen folgende Schritte vorgesehen.

Kann durch das numerische Optimierungsverfahren OV keine Lösung ermittelt werden 12, werden durch das Spaltengenerierungsverfahren SG neue Spalten NS mit negativen reduzierten Kosten ermittelt 32.

Konnten keine neuen Spalten NS ermittelt werden 32, 33, so existiert für das aktuell bearbeitete Teilproblem keine Lösung 34 und somit wird nicht weiter verzweigt, d. h. es werden keine neuen Teilprobleme durch Fixierung weiterer Variablen erzeugt. Es wird nun aus der Problemliste das nächste zu lösende Teilproblem geladen und bearbeitet.

Konnten allerdings neue Spalten NS generiert werden 33, werden die neuen Spalten NS mit dem aktuellen Teil TZR der Menge zulässiger Ressourcen ZR zu einem neuen Teil NTZR der Menge zulässiger Ressourcen ZR verknüpft, auf den wiederum das numerische Optimierungsverfahren OV neu angewendet wird 11. Dieser Prozeß wird iterativ fortgesetzt, bis entweder eine neue Lösung bestimmt ist oder feststeht, daß keine solche existiert.

Kann durch das numerische Optimierungsverfahren OV eine Lösung ermittelt werden 12, werden durch das Spaltengenerierungsverfahren SG neue Spalten NS mit negativen reduzierten Kosten ermittelt 13.

Werden neue Spalten NS generiert 14, werden die neuen Spalten NS mit dem aktuellen Teil TZR der Menge zulässiger Ressourcen ZR zu einem neuen Teil NTZR der Menge zulässiger Ressourcen ZR verknüpft, auf den wiederum das numerische Optimierungsverfahren neu angewendet wird 11.

Konnten keine neuen Spalten NS ermittelt werden 14, wird nun untersucht, ob die Lösung des numerischen Optimierungsverfahrens OV ganzzahlig ist 15.

Ist dies der Fall, bedeutet dies, daß das Teilproblem durch das numerische Optimierungsverfahren OV garantiert optimal gelöst worden ist und somit erübrigt sich eine weitere Verzweigung 16.

Ist diese ganzzahlige Lösung kleiner als der Wert der bisher besten ermittelten Lösung, wird die bisher ermittelte beste Lösung durch die neue ganzzahlige Lösung ersetzt und gespeichert. Es wird nun aus der Problemliste das nächste zu lösende Teilproblem geladen und bearbeitet.

Ist die Lösung jedoch nicht ganzzahlig 15, werden mögliche Schnittebenen ermittelt 17. Mögliche Vorgehensweisen zur Ermittlung von Schnittebenen sind beschrieben in (K. L. Hoffmann, M. Padberg, Solving Airline Crew Scheduling Problems by Branch-and-Cut, Management Science, Vol. 39, No. 6, S. 657-682, 1993).

Durch die Schnittebenen erreicht man im allgemeinen eine Qualitätsverbesserung der durch das SIMPLEX-Verfahren bestimmten unteren Schranke für das aktuelle Teilproblem. In vielen Fällen kann durch die Schnittebenenverfahren auch eine ganzzahlige Lösung des aktuellen Teilproblems ermittelt werden, so daß nicht weiter verzweigt werden muß.

Konnten neue Schnittebenen generiert werden 18, wird das numerische Optimierungsverfahren OV fortgesetzt auf den Teil TZR der Menge der zulässigen Ressourcen ZR und die generierten Schnittebenen 11.

Um eine Verbesserung des Verfahrens zu erreichen kann es vorteilhaft sein, falls keine Schnittebenen ermittelt werden konnten 17, in diesem Fall vor der Verzweigung in Teilprobleme zusätzliche Heuristiken zur Ermittlung einer ganzzahligen Lösung, die nicht notwendigerweise optimal ist, aber besser ist als die beste bisher bekannte optimale Lösung des jeweiligen Teilproblems einzusetzen 19. Dadurch wird der Suchbereich, in dem die optimale Lösung gesucht wird, schneller eingegrenzt. Ist durch die Heuristik eine bessere ganzzahlige Lösung des jeweiligen Teilproblems ermittelt worden 31, so wird der Wert der globalen oberen Schranke abktualisiert 36.

Andernfalls wird der Wert einer lokalen unteren Schranke des jeweiligen Teilproblems aktualisiert 35.

Eine weitere Verbesserung des Verfahrens kann erreicht werden, wenn schon zu Beginn des Verfahrens eine möglichst gute obere Schranke des ersten Teilproblems ermittelt wird, die die maximalen Kosten der ersten Zuordnung angibt.

## Patentansprüche

1. Verfahren zur Zuordnung von Ressourcen auf Fahrzeuge, die eine vorgegebene Strecke befahren, durch einen Rechner,

   a) bei dem eine Menge zulässiger Ressourcen (ZR) in Form eines Spaltengenerierungsgraphen (SGG) gespeichert werden,

b) bei dem von dem Rechner auf einen Teil (TZR) der Menge zulässiger Ressourcen (ZR) ein numerisches Optimierungsverfahren (OV) angewendet wird (11),

c) bei dem bei einer existierenden Lösung (12) des numerischen Optimierungsverfahrens (OV) folgende Verfahrensschritte von dem Rechner durchgeführt werden:

ca) es werden anhand von negativen reduzierten Kosten (RK) neue Spalten (NS) ermittelt (13) mit Hilfe eines Spaltengenerierungsverfahrens (SG),

cb) wurden neue Spalten (NS) generiert (14), so werden die neuen Spalten (NS) mit dem Teil (TZR) der Menge zulässiger Ressourcen (ZR) zu einem neuen Teil (NTZR) der Menge zulässiger Ressourcen (ZR) verknüpft,

cc) der Rechner wendet das gesamte Verfahren wieder auf den neuen Teil (NTZR) der Menge zulässiger Ressourcen (ZR) an (11),

cd) findet das Spaltengenerierungsverfahren (SG) keine neuen Spalten (NS;14) und ist die Lösung des numerischen Optimierungsverfahren (OV) ganzzahlig (15), so stellt die Lösung des numerischen Optimierungsverfahrens (OV) die optimierte Zuordnung (OZ) dar (16),

ce) findet das Spaltengenerierungsverfahren (SG) keine neuen Spalten (NS; 14) und ist die Lösung des numerischen Optimierungsverfahren (OV) nicht ganzzahlig (15), so werden Schnittebenen (SE) ermittelt (17),

cf) wenn Schnittebenen (SE) gefunden und generiert wurden (18), wird das numerische Optimierungsverfahren (OV) unter Berücksichtigung der Schnittebenen von dem Rechner weitergeführt (11),

d) bei dem für den Fall, daß keine Lösung des numerischen Optimierungsverfahrens (OV) existiert (12), folgende Schritte von dem Rechner durchgeführt werden:

da) es werden anhand von negativen reduzierten Kosten (RK) neue Spalten (NS; 32) ermittelt mit Hilfe des Spaltengenerierungsverfahrens (SG),

db) wurden neue Spalten (NS; 33) generiert, so werden die neuen Spalten (NS) mit dem Teil (TZR) der Menge zulässiger Ressourcen (ZR) zu einem neuen Teil (NTZR) der Menge zulässiger Ressourcen (ZR) verknüpft,

dc) der Rechner wendet das gesamte Verfahren wieder auf den neuen Teil (NTZR) der Menge zulässiger Ressourcen (ZR) an (11),

dd) findet das Spaltengenerierungsverfahren (SG) keine neuen Spalten (NS), so wird der Teil (TZR) der Menge zulässiger Ressourcen (ZR) aufgeteilt in kleinere Teile (KTZR) der Menge zulässiger Ressourcen (ZR), für die jeweils das gesamte Verfahren durchgeführt wird (11).

**2.** Verfahren nach Anspruch 1, bei dem das numerische Optimierungsverfahren (OV; 20) durch ein SIMPLEX-Verfahren (21) realisiert wird.

**3.** Verfahren nach Anpruch 1 oder 2, bei dem für den Fall, daß keine Schnittebenen (SE) von dem Rechner generiert wurden (18), zusätzliche Optimierungsheuristiken (19) auf den Teil (TZR) der Menge zulässiger Ressourcen (ZR) angewendet werden zur Bestimmung einer globalen oberen Schranke.

**4.** Verfahren nach einem der Ansprüche 1 bis 3, bei dem zu Beginn des Verfahrens eine obere Schranke einer ersten Zuordnung der Menge zulässiger Ressourcen (ZR) ermittelt wird, die die maximalen Kosten der ersten Zuordnung angibt.

## Claims

**1.** Method for allocating resources to vehicles, which are travelling over a predetermined route, by means of a computer,

a) in which a set of permissible resources (ZR) is stored in the form of a column generation graph (SGG)

b) in which the computer applies a numerical optimization method (OV) to a portion (TZR) of the set of permissible resources (ZR),

c) in which, when a solution (12) exists for the numerical optimization method (OV), the following method steps are carried out by the computer:

ca) negative reduced costs (RK) are used to determine (13) new columns (NS) using a column generation method (SG),
cb) when new columns (NS) have been generated (14), then the new columns (NS) are linked to the portion (TZR) of the set of permissible resources (ZR) to form a new portion (TZR) of the set of permissible resources (ZR),
cc) the computer applies (11) the entire method once again to the new portion (TZR) of the set of permissible resources (ZR),
cd) if the column generation method (SG) finds no new columns (NS;14) and if the solution of the numerical optimization method (OV) is an integer (15), then the solution of the numerical optimization method (OV) represents (16) the optimized allocation (OZ),
ce) if the column generation method (SG) finds no new columns (NS;14) and if the solution of the numerical optimization method (OV) is not an integer (15), then section planes (SE) are determined (17),
cf) if section planes (SE) have been found and generated (18), the numerical optimization method (OV) is continued (11) by the computer taking account of the section planes,

d) in which, in the situation when no solution of the numerical optimization method (OV) exists (12), the following steps are carried out by the computer:

da) negative reduced costs (RK) are used to determine new columns (NS; 32) using a column generation method (SG),
db) when new columns (NS; 33) have been generated, then the new columns (NS) are linked to the portion (TZR) of the set of permissible resources (ZR) to form a new portion (TZR) of the set of permissible resources (ZR),
dc) the computer applies (11) the entire method once again to the new portion (TZR) of the set of permissible resources (ZR),
dd) if the column generation method (SG) finds no new columns (NS), then the portion (TZR) of the set of permissible resources (ZR) is split into smaller portions (KTZR) of the set of permissible resources (ZR), for each of which the entire method is carried out (11).

2. Method according to Claim 1, in which the numerical optimization method (OV; 20) is implemented by means of a SIMPLEX method (21).

3. Method according to Claim 1 or 2, in which, in the situation where no section planes (SE) have been generated (18) by the computer, additional optimization heuristics (19) are applied to the portion (TZR) of the set of permissible resources (ZR) in order to determine a global upper limit.

4. Method according to one of Claims 1 to 3, in which, at the start of the method, an upper limit of a first allocation of the set of permissible resources (ZR) is determined, and indicates the maximum costs of the first allocation.

**Revendications**

1. Procédé d'attribution informatisée de ressources à des véhicules parcourant une section prédéfinie,

a) dans lequel un ensemble de ressources admissibles (ZR) est mis en mémoire sous forme de graphe de génération de colonnes (SGG),
b) dans lequel un procédé d'optimisation numérique (OV) est appliqué par l'ordinateur à une partie (TZR) de l'ensemble de ressources admissibles (ZR ; 11),
c) dans lequel, s'il existe une solution (12) du procédé d'optimisation numérique (OV), les opérations suivantes sont effectuées par l'ordinateur :

ca) au moyen de coûts réduits négatifs (RK), de nouvelles colonnes (NS) sont déterminées (13) à l'aide d'un procédé de génération de colonnes (SG),
cb) en cas de génération (14) de nouvelles colonnes (NS), les nouvelles colonnes (NS) sont liées avec la partie (TZR) de l'ensemble de ressources admissibles (ZR) pour en former une nouvelle partie (NTZR) de l'ensemble de ressources admissibles (ZR),
cc) l'ordinateur applique le procédé global à la nouvelle partie (NTZR) de l'ensemble de ressources admissibles (ZR ; 11),

cd) si le procédé de génération de colonnes (SG) ne trouve pas de nouvelles colonnes (NS ; 14) et que la solution du procédé d'optimisation numérique (OV) est un nombre entier (15), la solution du procédé d'optimisation numérique (OV) représente l'attribution optimisée (OZ; 16),
ce) si le procédé de génération de colonnes (SG) ne trouve pas de nouvelles colonnes (NS ; 14) et que la solution du procédé d'optimisation numérique (OV) n'est pas un nombre entier (15), des plans de coupe (SE) sont déterminés (17),
cf) si des plans de coupe (SE) ont été trouvés et générés (18), l'ordinateur poursuit le procédé d'optimisation numérique (OV ; 11) en tenant compte des plans de coupe,

d) dans lequel, s'il n'y a pas de solution du procédé d'optimisation numérique (OV ; 12), les opérations suivantes sont effectuées par l'ordinateur :

da) au moyen de coûts réduits négatifs (RK), de nouvelles colonnes (NS ; 32) sont déterminées à l'aide du procédé de génération de colonnes (SG),
db) en cas de génération de nouvelles colonnes (NS ; 33), les nouvelles colonnes (NS) sont liées avec la partie (TZR) de l'ensemble de ressources admissibles (ZR) pour en former une nouvelle partie (NTZR) de l'ensemble de ressources admissibles (ZR),
dc) l'ordinateur applique le procédé global à la nouvelle partie (NTZR) de l'ensemble de ressources admissibles (ZR ; 11),
dd) si le procédé de génération de colonnes (SG) ne trouve pas de nouvelles colonnes (NS), la partie (TZR) de l'ensemble de ressources admissibles (ZR) est divisée en parties plus petites (KTZR) de l'ensemble de ressources admissibles (ZR), et le procédé global est appliqué à chacune d'entre elles (11).

**2.** Procédé selon la revendication 1, dans lequel on utilise pour le procédé d'optimisation numérique (OV ; 20) une méthode du simplexe (21).

**3.** Procédé selon la revendication 1 ou 2, dans lequel, si l'ordinateur n'a pas généré des plans de coupe (SE ; 18), des heuristiques d'optimisation supplémentaires (19) sont appliquées à la partie (TZR) de l'ensemble de ressources admissibles (ZR) pour déterminer une limite supérieure globale.

**4.** Procédé selon l'une des revendications 1 à 3, dans lequel, au début du procédé, une limite supérieure d'une première attribution de l'ensemble de ressources admissibles (ZR) est déterminée, qui indique les coûts maximums de la première attribution.

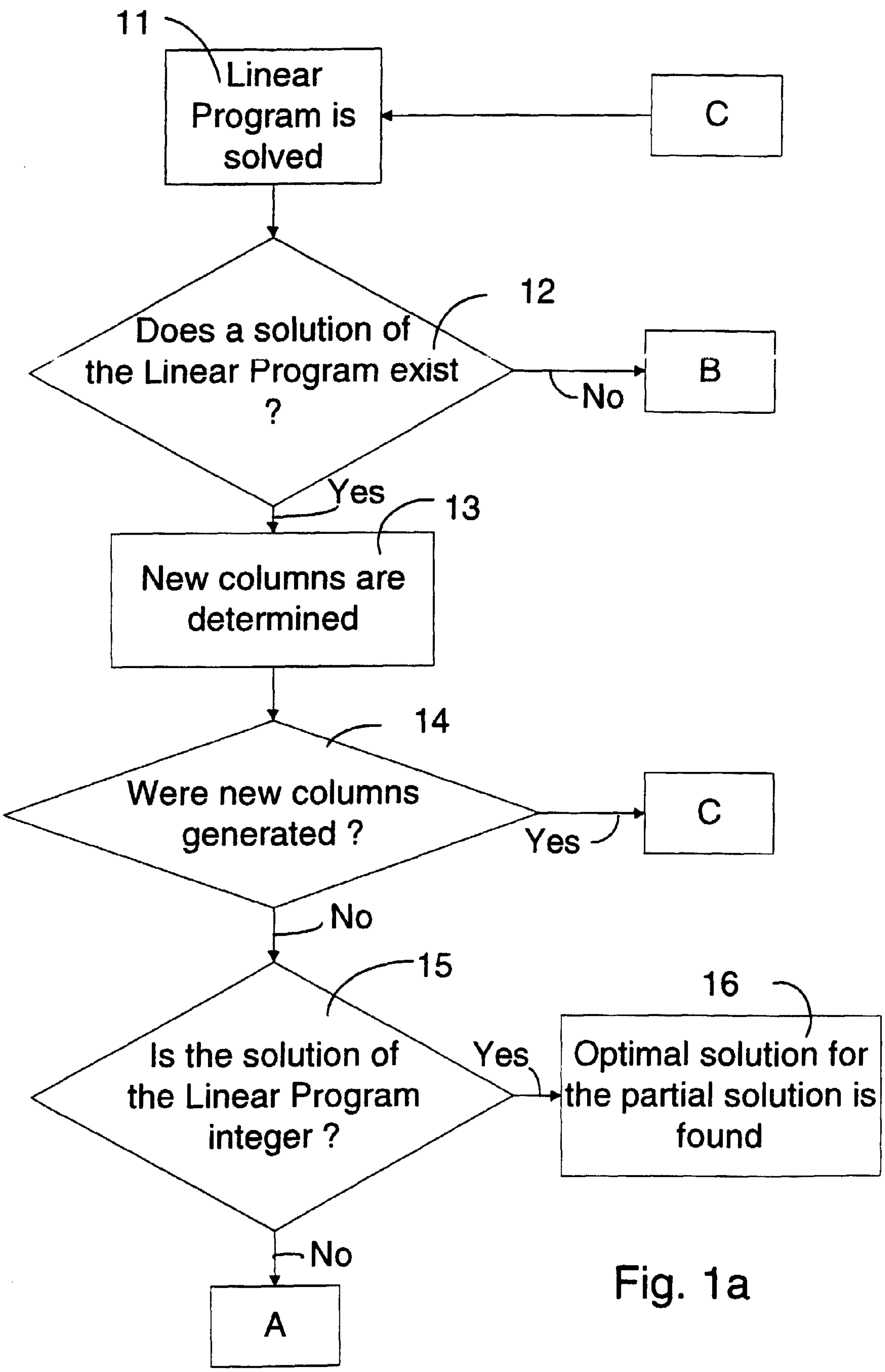
11
Linear Program is solved
C
12
Does a solution of the Linear Program exist ?
No
B
Yes
13
New columns are determined
14
Were new columns generated ?
Yes
C
No
15
16
Is the solution of the Linear Program integer ?
Yes
Optimal solution for the partial solution is found
No
A

Fig. 1a

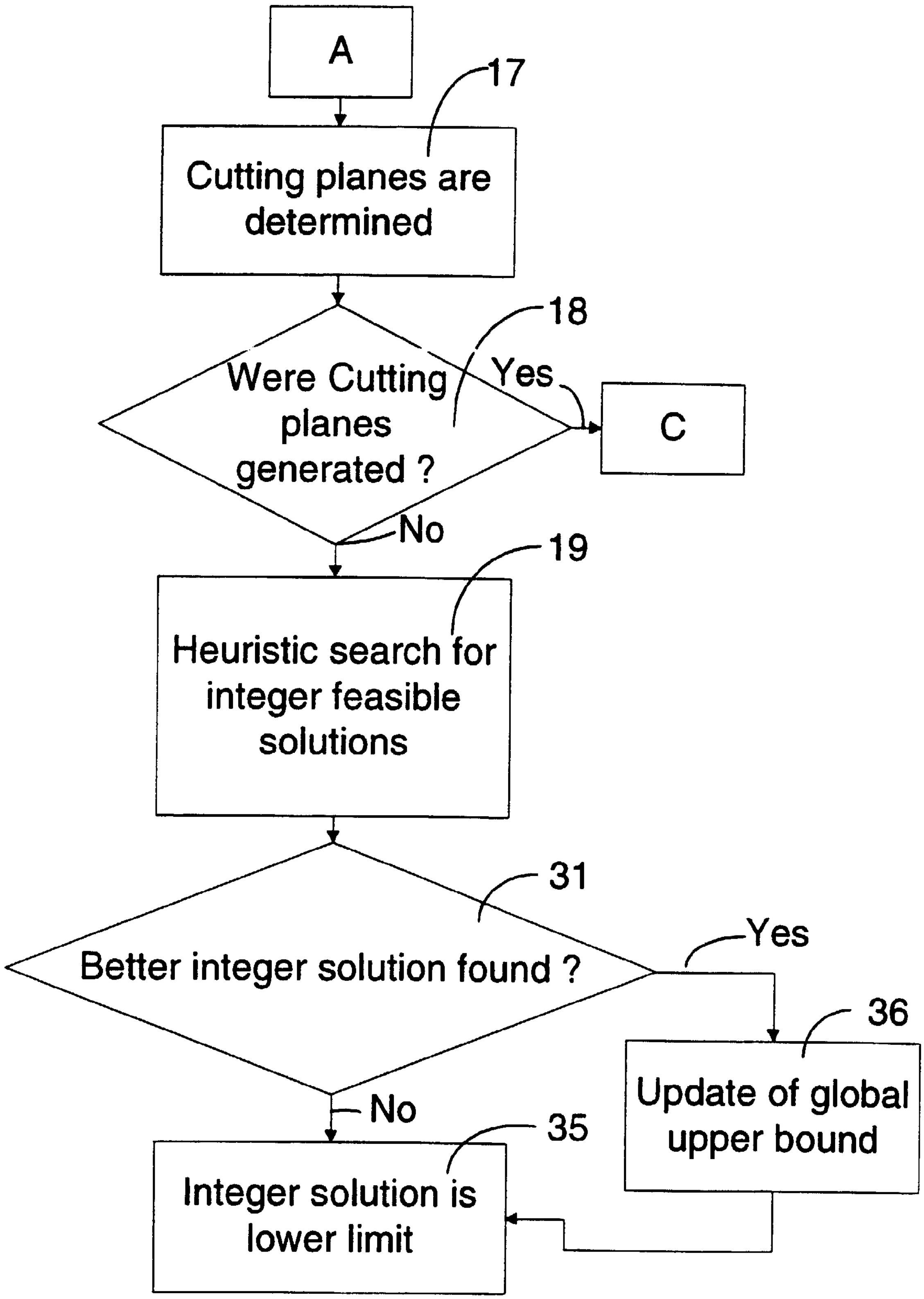
A
17
Cutting planes are determined
18
Were Cutting planes generated ?
Yes
C
No
19
Heuristic search for integer feasible solutions
31
Better integer solution found ?
Yes
36
Update of global upper bound
No
35
Integer solution is lower limit

Fig. 1b

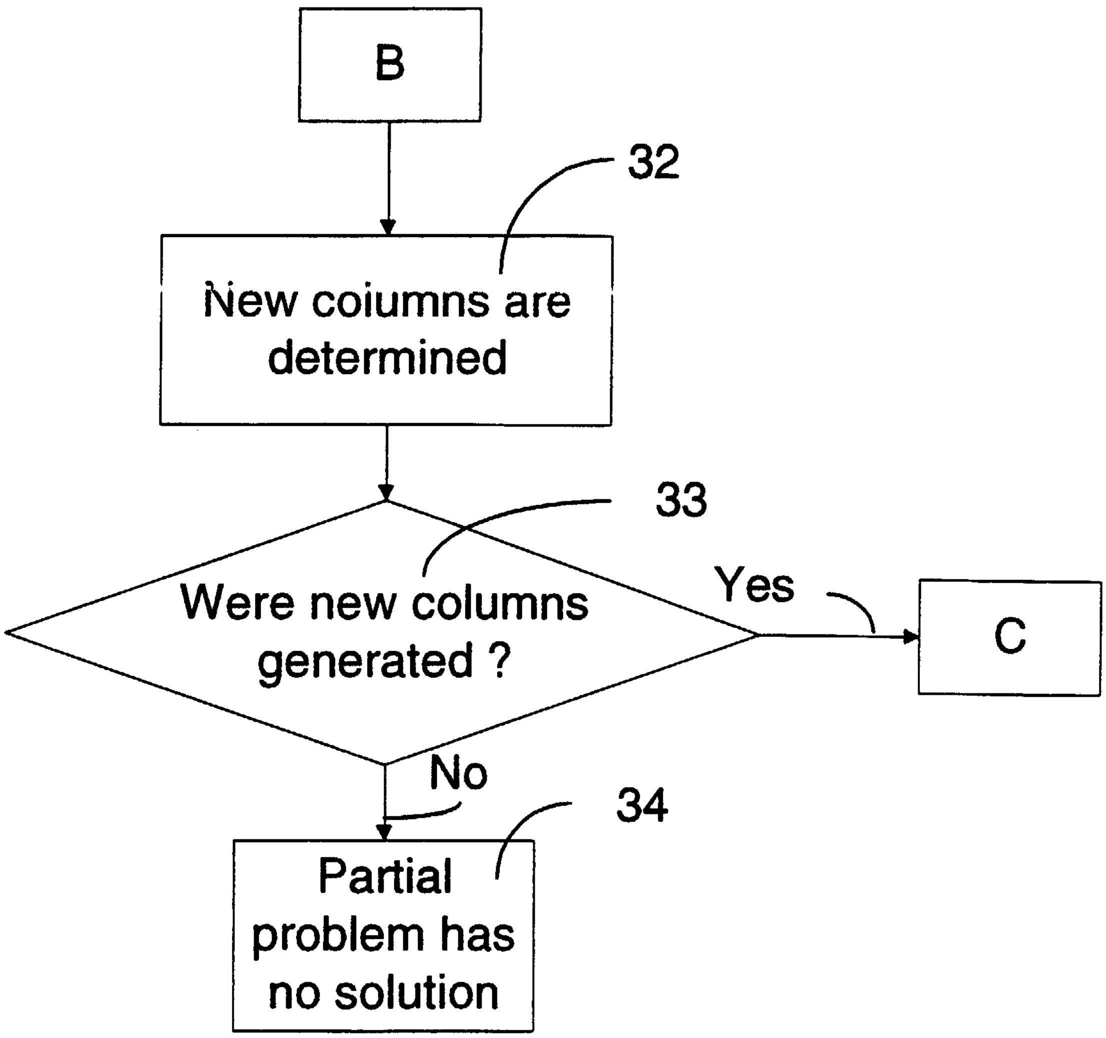
B
32
New coiumns are determined
33
Were new columns generated ?
Yes
C
No
34
Partial problem has no solution

Fig. 1c

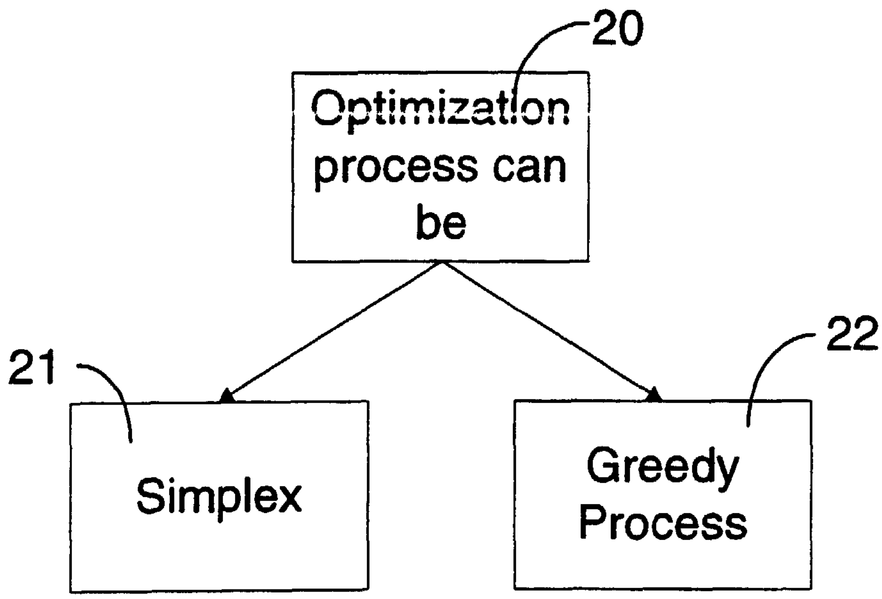
20
Optimization process can be
21
Simplex
22
Greedy Process

Fig. 2